# EUROPÄISCHE PATENTANMELDUNG

(11) **EP 2 432 074 A1**
(43) Veröffentlichungstag der Anmeldung: **21.03.2012**
(21) Anmeldenummer: 10075515.6
(22) Anmeldetag: 21.09.2010
(51) Int. Cl.: H01Q 9/28, H01Q 1/22, G06K 19/077, H05K 3/10

(54) **Baugruppe mit wenigstens einer UHF-Dipol-Antenne**

(71) Anmelder: Printechnologics GmbH, 09112 Chemnitz (DE)
(72) Erfinder: Förster, Matthias, 01307 Dresden (DE); Kreutzer, André, 09648 Mittweida (DE); Thiele, Jan, 09127 Chemnitz (DE); Voigt, Sascha, 09337 Bernsdorf (DE)
(74) Vertreter: Lange, Sven

(57) **Zusammenfassung**

Die Erfindung beschreibt eine Baugruppe mit wenigstens einer UHF-Dipol-Antenne, wobei diese durch ein Druckverfahren hergestellt ist.

## Beschreibung

Die Erfindung betrifft Dipol-Antennen und ein Verfahren zu deren Herstellung, sowie Verwendungen derartiger Antennen.

Im Stand der Technik sind verschiedene, vor allem flächige Druckmaterialien oder Druckprodukte beschrieben, die mittels verschiedener Beschichtungsverfahren hergestellt werden können.

So offenbart beispielsweise die EP 1 803 562 A1 ein Verfahren zum Transfer von bildgebenden Schichten von einer Trägerfolie auf Druckbogen in einer bogenverarbeitenden Maschine, wenigstens mit einem Auftragswerk für eine bildmäßige oder flächige Beschichtung eines Druckbogens mit einem Kleber und wenigstens einem Beschichtungswerk zum Übertragen bildgebender Schichten von der Trägerfolie auf den Druckbogen.

Weiterhin beschreibt die DE 10 2008 013 509 A1 ein steganografisches Verfahren, wobei mittels Transferfolientechnik Sicherheitsmerkmale in Druckprodukten erzeugbar sind. Die Verifikation der Merkmale erfolgt optisch mittels Dekoder.

Die DE 10 2006 031 795 A1 offenbart ein Sicherheitsmerkmal, welches mittels Transferfolientechnik erzeugt wurde. In diesem Verfahren werden Widerstände oder Widerstandsnetzwerke in Druckprodukte eingebracht, welche ein Sicherheitsmerkmal darstellen sollen. Die Verifikation erfolgt kontaktbehaftet mittels eines Lesegeräts, durch welches die Widerstände nach dem ohmschen Prinzip gemessen werden.

Die Druckschrift DE 10 2004 007 458 A1 beschreibt ein Verfahren zur Herstellung von RFID Etiketten und die Druckschrift DE 10 2004 019 412 A1 beschreibt ein Verfahren zum Drucken elektrischer und/oder elektronischer Strukturen und Folie zur Verwendung in solch einem Verfahren. In beiden Druckschriften wird die Möglichkeit der Nutzung von Bogen- und/oder Rollenoffsetmaschinen zur Herstellung elektrisch leitfähiger Strukturen erwähnt.

Die Druckschrift DE 10 2007 026 720 A1 offenbart ein Verfahren und Mittel zur Erzeugung Selbstklebender RFID Antennen und Verfahren zu deren Herstellung. Darin wird unter anderem die Verwendung einer Aluminiumfolie in einer Stärke von 1-20µm beschrieben welche in einer Sondermaschine unter Zuhilfenahme von Werkzeugen (Stanzen) aus einem bahnförmigen Träger ausgestanzt und entgittert werden.

Außerdem beschreibt die DE 10 2005 042 444 B4 eine Anordnung für eine RFID-Transponderantenne bestehend aus zwei galvanisch entkoppelten Strukturen. Zum einen eine Impedanz anpassende Struktur und zum anderen eine resonante Struktur, welche auf unterschiedlichen Substraten gefertigt werden können um besonders effiziente Fertigungen zu gewährleisten. Als Herstellungsmethoden sind konventionelle Verfahren wie beispielsweise Drucken, Ätzen und Legetechniken wie sie für RFID Antennen Stand der Technik sind.

Die Antenne ist unmittelbar bereit den RFID-Chip mittels Kleber oder Löttechniken aufzunehmen und stellt damit eine komplette RFID-Antenne mit Transponderchip dar. Dies hat speziell in der Aufbringung der Chips mehrere Nachteile, weil die relativ großen resonanzanpassenden Strukturen, die eigentlichen Dipolantennen, durch die Bestückungsmaschinen laufen und deren Geschwindigkeit reduzieren.

Die Aufgabe der Erfindung ist es, eine einfache und ökonomisch günstig herstellbare Dipol-Antenne bereitzustellen, welche nicht die Nachteile der im Stand der Technik beschriebenen Antennen aufweist.

Gelöst wird die Aufgabe durch die unabhängigen Ansprüche. Vorteilhafte Ausführungsformen ergeben sich aus den Unteransprüchen.

Es war völlig überraschend, dass eine Baugruppe mit wenigstens einer UHF-Dipol-Antenne aufweisend zwei beabstandete Dipolenden bereitgestellt werden kann, die nicht die Nachteile und Mängel der im Stand der Technik offenbarten Antennen aufweist und die durch ein Druckverfahren umfassend die folgenden Schritte herstellbar ist:
a. Bereitstellung einer Transferfolie auf einer Rolle, wobei die Transferfolie eine Trägerfolie und eine zumindest bereichsweise darauf befindlichen elektrisch leitfähigen Transferschicht umfasst,
b. Bereitstellung eines nicht leitfähigen Substrates,
c. Bereitstellung eines Klebers,
d. strukturierte Aufbringung des Klebers gemäß c) auf das Substrat gemäß b) und/oder auf die Transferfolie gemäß a),
e. wobei die Struktur des Klebers so aufgebracht ist, dass der maximale Abstand der Dipolenden quer zur Abrollrichtung der Transferfolie liegt oder
e'. wobei die Struktur des Klebers so aufgebracht ist, dass der maximale Abstand der Dipolenden keinesfalls längs zur Abrollrichtung der Transferfolie liegt.

Überraschenderweise kann mit dem neuen Verfahren gemäß a. bis e. / e'. eine neue Baugruppe mit wenigstens einer UHF-Dipol-Antenne aufweisend zwei beabstandente Dipolenden bereitgestellt werden, die vorteilhafte Eigenschaften aufweist. Vorteilhafterweise kann durch die erfindungsgemäße Baugruppe bei einem geringen Materialeinsatz eine maximale Reichweite der Antenne erreicht werden. Überraschenderweise ist die Struktur der UHF-Dipol-Antenne kapazitiv auswertbar. Eine Baugruppe ist im Sinne der Erfindung insbesondere eine konstruktive und/oder funktionelle Einheit aus integrierten und/oder diskreten und passiven Bauelementen und/oder dem Bauelementeträger.

Die Erfindung betrifft mithin ein Druckverfahren zur Herstellung einer Baugruppe mit wenigstens einer UHF-Dipol-Antenne aufweisend zwei beabstandente Dipolenden, umfassend die folgenden Schritte:
a. Bereitstellung einer Transferfolie auf einer Rolle, wobei die Transferfolie eine Trägerfolie und eine zumindest bereichsweise darauf befindlichen elektrisch leitfähigen Transferschicht umfasst,
b. Bereitstellung eines nicht leitfähigen Substrates,
c. Bereitstellung eines Klebers,
d. strukturierte Aufbringung des Klebers gemäß c) auf das Substrat gemäß b) und/oder auf die Transferfolie gemäß a),
e. wobei die Struktur des Klebers so aufgebracht ist, dass der maximale Abstand der Dipolenden quer zur Abrollrichtung der Transferfolie liegt.

Die Erfindung betrifft weiterhin ein Druckverfahren zur Herstellung einer Baugruppe mit wenigstens einer UHF-Dipol-Antenne aufweisend zwei beabstandente Dipolenden, umfassend die folgenden Schritte:
a. Bereitstellung einer Transferfolie auf einer Rolle, wobei die Transferfolie eine Trägerfolie und eine zumindest bereichsweise darauf befindlichen elektrisch leitfähigen Transferschicht umfasst,
b. Bereitstellung eines nicht leitfähigen Substrates,
c. Bereitstellung eines Klebers,
d. strukturierte Aufbringung des Klebers gemäß c) auf das Substrat gemäß b) und/oder auf die Transferfolie gemäß a),
e'. wobei die Struktur des Klebers so aufgebracht ist, dass der maximale Abstand der Dipolenden keinesfalls längs zur Abrollrichtung der Transferfolie liegt.

Die Erfindung betrifft auch eine mit den Druckverfahren hergestellte Baugruppe mit wenigstens einer UHF-Dipol-Antenne aufweisend zwei beabstandente Dipolenden.

Die erfindungsgemäße Dipol-Antenne umfasst eine resonante Struktur in Form der Antenne, vorteilhafterweise in Form einer RFID-Antenne. RFID bezeichnet im Sinne der Erfindung insbesondere eine Identifizierung mit Hilfe von elektromagnetischen Wellen (Radio Frequency Identification). Ein derartiges RFID-System besteht bekannterweise im Wesentlichen aus einem Transponder, einer Sende- /Empfangseinheit für die Daten des Transponders und einer Datenverarbeitungseinheit. Der Transponder weist bevorzugt einen Chip mit einer analogen und einer digitalen Schaltungsstruktur und eine Antennenstruktur auf. Die Antennenstruktur kann vorteilhafterweise mehrere Komponenten umfassen, beispielsweise eine resonante und/oder eine Impedanz anpassende Struktur. Diese können sich auf einem Träger oder verschiedenen Trägern befinden.

Erfindungsgemäß wird eine resonante Struktur in Form einer Dipol-Antenne bereitgestellt. Dabei ist die Dipol-Antenne bevorzugt als UHF-Antenne (UHF = Ultra high frequency) ausgebildet.

Maschinen zur Bearbeitung flexibler Materialien z.B. mittels Druckmaschinen werden im Wesentlichen in zwei Klassen unterschieden. Zum einen Rollen verarbeitende Maschinen und zum anderen Bogen verarbeitende Maschinen. Rolle und Bogen beziehen sich im Beispiel der Druckmaschine auf die Form in welcher das Papier in die Maschine eingebracht wird. Beide Klassen haben eine Laufrichtung des Materials, die sogenannte Maschinenlaufrichtung - im Sinne der Erfindung insbesondere als "MD" (machine direction") bezeichnet. Die dazu orthogonale Richtung wird im Sinne der Erfindung insbesondere als "CMD" (cross machine direction) bezeichnet. Bringt man auf flexible Trägermaterialien sehr dünne Funktionsschichten oder Schichtdicken auf, neigen diese durch Biegungen und Transportvorrichtungen innerhalb der Maschine zu Brüchen und Knicken, welche eine mittelbare oder unmittelbare Funktionsbeeinträchtigung hervorrufen. Diese Brüche und Knicke treten vorzugsweise an Stellen großer mechanischer Belastung auf, etwa durch wechselseitige Biegung und dann dort vor allem entlang des Biegescheitels. Solche beschriebenen mechanischen Belastungen treten auch in Maschinen mit Transferfolieneinrichtung auf.

Es war völlig überraschend, dass die Brüche, Knicke und dem einhergehenden Funktionsverlust bei der erfindungsgemäßen Baugruppe verhindert und minimiert werden können, indem die UHF-Dipol-Antenne so orientiert wird, dass der maximale Abstand der Dipolenden im Wesentlichen quer zur Abrollrichtung der Transferfolie liegt. Die UHF-Dipol-Antenne kann im Sinne der Erfindung insbesondere auch so orientiert werden, dass der maximale Abstand der Dipolenenden im Wesentlichen längs der Achse der Rolle oder in CMD liegt. Es soll gewährleisten, dass die dünnen elektrisch leitfähigen Schichten mit minimaler Angriffsfläche über die maschinenbedingten Biegescheitel gebracht werden. Das überraschende Resultat sind UHF-Dipolantennen mit geringstem Materialaufwand bei maximal möglicher Performance (= Lesereichweite). Würde man die UHF-Dipol-Antenne schrittweise um 90° drehen, würde ein zunehmender Performanceverlust eintreten, welcher bei 90° maximal wird und kompletten Funktionsverlust bedeuten kann. Somit kann durch die erfindungsgemäße Baugruppe ein wesentlicher Vorteil gegenüber dem im Stand der Technik offenbarten Dipol-Antennen erreicht werden.

Es ist bevorzugt neben der Dipol-Antenne weitere zusätzliche Datenstrukturen zu realisieren, welche insbesondere kapazitiv, optisch und/oder induktiv ausgelesen werden können. In einer bevorzugten Ausführungsform kann ein multipler Informationsträger als Baugruppe bzw. System realisiert werden.

Grundlage bildet ein vollflächiges elektrisch leitfähiges Transfermaterial, aus dem diese Struktur bevorzugt herausgelöst wird. Dazu wird bevorzugt das sogenannte Kaltfolientransferverfahren benutzt. Das Transfermaterial kann dabei insbesondere aus Metallen, Graphit, Ruß, dielektrischen Werkstoffen oder anderen, dem Fachmann bekannten Materialien, bestehen. Die elektrische Leitfähigkeit kann im Sinne der Erfindung insbesondere auch als Konduktivität bezeichnet werden. Bevorzugte Metalle oder metallhaltige Stoffe umfassen Aluminium, Blei, Eisen, Gold, Kupfer, Magnesium, Wolfram, Zink oder Zinn. Als ein dielektrische Material kann bevorzugt jede elektrisch schwach oder nicht leitende, nicht metallische Substanz, deren Ladungsträger im Allgemeinen frei beweglich sind, bezeichnet werden. Es kann sich hierbei beispielsweise um elektrisch leitfähige Kunststoffe wie PEDOT und PANI handeln. Insbesondere die Verwendung von Graphit, Ruß und/oder Kohlenstoff als Transfermaterial in Verbindung mit einem biologisch abbaubaren Substrat ist besonders vorteilhaft. Das bevorzugte Substrat mit der Dipol-Antenne kann so leicht dem natürlichen Stoffkreislauf zugeführt werden. Günstigerweise sind die Substrate ausgewählt aus der Gruppe Papier, Karton, einem Holzwerkstoff, einem Verbundwerkstoff, einem Kunststoff, einem biologisch abbaubaren Kunststoff, wenigstens einem Zellulosederivat, mindestens einem Stärkederivat oder wenigstens einer Kombination davon. Besonders vorteilhaft sind natürlich abbaubare Substrate.

Beim Kaltfolienverfahren erfolgt das strukturierte Aufbringen mittels einer Kleberschicht auf dem Substrat oder der Transferschicht. Es hat sich dabei gezeigt, dass auch elektrisch leitfähige Strukturen mit geringer elektrischer Leitfähigkeit zur Realisierung einer Dipol-Antenne geeignet sind. Das Aufbringen zeichnet sich durch einen hohen Ökonomisierungsgrad aus, wobei gleichzeitig weitere Strukturen, beispielsweise in Form von Datenstrukturen, mittels eines Massenproduktionsverfahrens realisierbar sind. Vorteilhafterweise können die Strukturen gleichzeitig die Bebilderung oder ein Teil der Bebilderung des jeweiligen Produkts darstellen.

Hierdurch steigen die Möglichkeiten zum Auslesen des Informationsträgers oder der Informationsträger des Produkts. Gleichzeitig wird eine selektive Informationsverteilung auf verschiedene Informationsträger Basistechnologien ermöglicht. Das kann vorteilhafterweise zur Produktsicherung, Produkttracking und/oder Verkaufssteigerung benutzt werden.

Damit kann in einfacher Weise ein multipler Informationsträger bereitgestellt werden, wobei die unterschiedliche Reichweite der jeweiligen Informationsträgerstrukturen und der dazugehörigen Basistechnologien ein weiteres positives Kriterium des multiplen Informationsträgers sind. Es ist damit möglich die jeweiligen Informationsträger von 0 bis 20m, mit sich teilweise reichweitetechnisch überlappenden Informationsträger-Basistechnologien komplett oder selektiv zu erfassen. Dadurch steigt die Redundanz bezüglich Datenerhalts im Falle eines Defektes und/oder Verlustes einzelner Informationsträger.

Es ist bevorzugt, dass der Kleber ein leitfähiger, insbesondere elektrisch leitfähiger Kleber ist.

Die Transferfolie selbst besteht aus mindestens zwei Schichten, einer transferierbaren Schicht, der Transferschicht, oder einem transferierbaren Medium zur Informationsabbildung und einem weiteren Trägermaterial, welches diese Schicht/dieses Medium trägt. Die Verbindung der zwei Schichten ist so ausgebildet, dass ein Übertrag der Transferschicht gut möglich ist, demnach also das Adhäsionsvermögen des Klebers höher sein muss als das Kohäsionsvermögen der Transferschicht und das Adhäsionsvermögen auf dem Trägermaterial der Transferschicht.

In einer weiteren Ausführungsform kann der Kleber direkt auf die Transferfolie aufgebracht und in Kontakt mit einem Trägermaterial gebracht sein. Dies kann zudem durch Zuhilfenahme von Druck, Temperatur, mechanischen Hilfsmitteln und dergleichen unterstützt werden. Die so auf das Substrat übertragene Schicht wird im Sinne der Erfindung insbesondere als Transferschicht bezeichnet, da durch den Kleber zumindest partiell eine stoffschlüssige Verbindung geschaffen wird und diese zum Substrat stärker ausgebildet ist, als der innere Zusammenhalt der Schicht auf der Transferfolie selbst. Damit wird das Übertragen der flächig auf der Transferfolie vorhandenen Transferschicht entsprechend der Struktur der Schicht des Klebers sichergestellt. Die außerhalb der Struktur der Schicht des Klebers angeordneten Bereiche der Transferschicht verbleiben auf dem Träger. Hierdurch kann überraschenderweise ein ökonomisches Verfahren zum Aufbringen einer strukturierten Schicht bereitgestellt werden. Die Dipol-Antenne kann dadurch als Massenprodukt ökonomisch günstig auf den unterschiedlichsten Substraten ausgebildet werden.

Vorteilhafterweise können sowohl der Kleberauftrag als auch das Zusammenfahren des Trägermaterials mit der Transferfolie in einer Maschine erfolgen. Ist der Materialübertrag erfolgt, enthält das Trägermaterial sowohl die Struktur des Klebers als auch diesen gleichermaßen deckend das Transfermaterial, welches nun ebenfalls strukturiert ist. Dieses strukturierte Transfermaterial auf dem Substrat stellt bevorzugt mindestens die Dipol-Antenne dar.

Es ist weiterhin bevorzugt, dass auf ein elektrisch nicht leitfähiges Substrat eine elektrisch leitfähige Transferschicht mit einer Schichtdicke von 1-1100 nm, bevorzugt 5-900 nm und besonders bevorzugt von 10-780 nm aufgebracht wird.

Weiterhin ist bevorzugt, dass die Baugruppe durch eine elektrisch nicht leitfähige Schicht, bevorzugt eine Papierschicht, eine Folienschicht, eine Farbschicht, eine Lackschicht und/oder Kombinationen derer, wenigstens bereichsweise überdeckt ist. Diese Schicht kann mehrere Funktionen ausüben, umfassend Schutz der Baugruppe gegenüber äußeren Einflüssen oder Unkenntlichmachung der Baugruppe. Die Schicht kann im Sinne der Erfindung insbesondere als Deckschicht bezeichnet werden und kann ebenfalls als Substrat verwendet werden. Das Substrat kann bevorzugt aus Papier, Karton, einem Holzwerkstoff, einem Verbundwerkstoff, einem Kunststoff, einem biologisch abbaubaren Kunststoff, wenigstens einem Zellulosederivat, einem Stärkederivat und/oder einer Kombination davon bestehen. Besonders vorteilhaft sind natürlich abbaubare Substrate.

Die Baugruppe wird bevorzugt als RFID-Transponder verwendet, wobei die UHF-Dipolantenne als eine Resonanz anpassende Struktur verwendet wird und mit einer Impedanz anpassenden Spule und wenigstens einem damit elektrisch verbundenem Mikrochip in räumliche Annäherung von 0-3 cm gebracht vorliegt. Die Baugruppe besteht somit aus der UHF-Dipolantenne und einem damit gekoppelten Transponder. Die Bauelemente des Transponders in Form der Spule und dem Mikrochip können in einer weiteren bevorzugten Ausführungsform als separate Baugruppe auf das Substrat mit der Antenne aufgebracht werden. Vorteilhafterweise kann die Spule auch mit Nutzung des Transferverfahrens aufgebracht werden.

Es ist bevorzugt, dass die Spule und/oder der Mikrochip auf einem separaten Zwischenträger angeordnet sind und der Zwischenträger bevorzugt selbstklebend ausgeführt ist. In der selbstklebenden Ausführung, ist der Zwischenträger besonders einfach auf dem Substrat fixierbar.

In einer weiteren bevorzugten Ausführungsform ist die UHF-Dipol-Antenne auf oder an einem ersten Gegenstand und die Spule mit wenigstens einem damit elektrisch verbundenem Mikrochip auf oder an einem zweiten Gegenstand angeordnet, wobei die Gegenstände in räumlicher Annäherung von 0-3cm gebracht vorliegen. So entsteht erst durch eine bewusste oder unbewusste Annäherung der beiden Komponenten ein wirksamer Transponder. Die Dipol-Antenne kann bevorzugt ein Bestandteil einer Verpackung sein, während die Spule mit Mikrochip auf einem Gegenstand angebracht ist, für welchen die Verpackung vorgesehen ist. Durch Zusammenbringen von Gegenstand und Verpackung entsteht ein kompletter RFID-Transponder. Es ist bevorzugt, dass auf dem Substrat zusätzlich mindestens eine kapazitiv und/oder induktiv auslesbare Struktur als kapazitiver und/oder induktiver Informationsträger aufgebracht ist. Mit der zusätzlich aufgebrachten Struktur kann vorteilhafterweise ein multipel auslesbarer Informationsträger realisiert werden. Die aufgebrachte Struktur kann im Sinne der Erfindung insbesondere als Informationsschicht bezeichnet werden. Diese Struktur ist bevorzugt gleichfalls eine strukturiert aufgebrachte Transferschicht. Vorteilhafterweise wird diese in einem gleichen Arbeitsschritt mit der Dipol-Antenne aufgebracht, so dass ein sehr ökonomisch realisierter multipler Informationsträger zur Verfügung steht.

Vorteilhafterweise dient eine kapazitive Leseeinrichtung dabei zur Decodierung, Detektion und/oder zum Auslesen der aufgebrachten Informationsschicht. Dabei sind die aktiven Flächen des Lesegerätes insbesondere so ausgebildet, dass die Informationen des Informationsträgers zweifelsfrei ausgelesen werden können. Dem Fachmann sind Lesegeräte zum kapazitiven Auslesen eines Informationsträgers oder Datenträgers bekannt. Mögliche Lesegeräte umfassen beispielsweise kapazitive Lesegeräte und/oder einen kapazitiven Flächensensor beinhaltende Geräte wie kapazitive Touchscreens und/oder Touchpads. Sie sind beispielsweise ausgewählt aus der Gruppe umfassend Smartphones, Handys, Displays, Tablet-PCs, Tablet-Notebooks, Tochpad-Geräten, Grafiktabletts, Fernseher, PDAs, MP3-Player, Trackpads und kapazitive Eingabegeräte ohne darauf begrenzt zu sein. Ein induktives Auslesen oder kombiniertes Auslesen (kapazitiv/induktiv) solcher Informationsträger kann auch bevorzugt sein.

Weiterhin ist bevorzugt, dass auf dem Substrat der Baugruppe mindestens eine optisch auslesbare Struktur, bevorzugt ein Code, aufgebracht ist. Damit kann eine optisch auslesbare Struktur in Form eines Codes ein weiterer bevorzugter Bestandteil der Baugruppe sein, so dass ein weiterer multipel auslesbarer Informationsträger realisierbar ist. Die Baugruppe kann bevorzugt als multipler Informationsträger verwendet werden. Auch auf dem Substrat kann vorteilhafterweise in gleicher Weise ein weiteres Datenformat aufgebracht sein. Ein bekanntes optisch auslesbares Datenmedium ist beispielsweise ein Barcode. Hierdurch steigt die Möglichkeit zum Auslesen eines bevorzugten Produkts. Dies ermöglicht einen stetigen und redundanten Informationszugang, selbst wenn durch Umgebungseinflüsse wie Schmutz (Barcode problematisch), metallische Untergründe (RFID problematisch) etc. einer der Informationsträger nicht ausgelesen werden kann. Weiterhin wird eine selektive Informationsverteilung auf verschiedene Basistechnologien ermöglicht. Damit werden Antennen und/oder Informationsträger ohne Zeitverlust oder Sondermaschinen in bereits existierende oder neue Produkte aufgebracht. Das sind beispielsweise Verpackungen, wobei diese entweder zur Produktsicherung, Produkttracking und/oder Verkaufssteigerung benutzbar sind.

Zudem besteht mit der vorhandenen Konfiguration die Möglichkeit, den Informationsträger über größere Distanzen mittels der Dipol-Antennen-Transponderanordnung auszulesen. Reichweiten von bis zu 20m oder mehr sind möglich. Während der kapazitive Informationsträger nur im Nahfeld ausgelesen werden kann (insbesondere wenige Millimeter). Gleiches gilt für induktive Informationsträger, welche wenige cm Reichweite erreichen. Ein Barcode kann über mehrere Dezimeter ausgelesen werden. Diese Kombinationen aus unterschiedlichen Leseverfahren und Reichweiten ermöglicht eine sehr komplexe Nutzung und Anwendung der Informationsträger ohne zusätzlichen Kostenaufwand. Unter Nutzung dieser 4 bevorzugten verschiedenen Basistechnologien kann ein gleichsam hergestellter Informationsträger mittels bevorzugt 4 verschiedener physikalischer Leseverfahren erkannt werden.

In einer weiteren bevorzugten Ausführungsform ist die Baugruppe wenigstens mit einer weiteren elektrischen Komponente, umfassend ein galvanisches Element, eine Kondensatoranordnung und/oder ein Chip, verbunden. Diese Komponente ist vorteilhafterweise ein galvanisches Element und/oder eine Kondensatoranordnung und/oder ein Chip. Das galvanische Element führt vorteilhafterweise zu einer aktiven oder zumindest semi-aktiven Baugruppe. Mit der Baugruppe kann damit auch eine aktive Datenverwaltung erfolgen, so dass die Anwendungsmöglichkeiten wesentlich erhöht werden.

Es ist weiterhin bevorzugt, dass die Baugruppe als mehrfrequenzfähiger RFID-Transponder verwendet wird, wobei auf oder an dem Substrat der UHF-Dipolantenne mindestens ein weiterer RFID Transponder eines weiteren Frequenzbereichs angeordnet ist. Damit können multiple RFID Systeme realisiert werden, bei denen ein RFID Transponder über eine größere Distanz auslesbar ist, während der andere RFID-Transponder bedingt durch Frequenz und Funktionsprinzip eine deutlich kürzere Reichweite aufweist. Dadurch kann in einer Systembaugruppe sowohl UHF als auch HF (= high frequency) Frequenzbänder ausgenutzt werden, was einen weiteren Vorteil darstellt.

Die Baugruppe kann bevorzugt gleichzeitig ein Bestandteil einer Verpackung und/oder eines Gegenstandes und/oder auf diesen angeordnet sein. Die Baugruppe kann leicht auf verschiedene Gegenstände aufgebracht werden, wobei die Oberflächen der Gegenstände nicht eben sein müssen. Damit ergeben sich die vielfältigsten Anwendungsmöglichkeiten der Baugruppe.

Es ist bevorzugt, dass wenigstens ein Teil einer Bebilderung, Schmuckschicht und/oder optischen Veredlung gleichzeitig die Baugruppe ist. Vorteilhafterweise kann dies bei Zahlen, Buchstaben oder Zeichen schnell und einfach realisiert werden. Ein Beispiel ist ein Wort mit T, wobei entweder der Querbalken oder der Längsbalken gleichzeitig die Dipol-Antenne sein kann. Weiterhin kann eine derartige Bebilderung vorteilhafterweise als Qualitäts- und Echtheitsmerkmal eingesetzt werden, wobei das durch die Funktionalität der Baugruppe begründet ist.

Die Dipol-Antenne selbst kann in einer bevorzugten Ausführungsform einen kapazitiven Informationsträger darstellen, indem die Struktur der UHF-Dipol-Antenne kapazitiv auswertbar ist.

Zur Herstellung sind beispielsweise in einer Bogenoffsetdruckmaschine, welche Papierbogen des Formats 100x70 verarbeitet, 110 RFID-Antennen im ID1-Format (Kreditkartengröße) angeordnet. Durch Nutzung des Verfahrens können bei einer Maschinengeschwindigkeit von 8000 Bogen/h 880.000 RFID-Antennen pro Stunde hergestellt werden. Bei Optimierung der Antennenfläche und/oder der Maschine sind Stückzahlen mit weit über 1.000.000 Antennen/Stunde realistisch. Dies zudem ohne Sondermaschinen oder Spezialwerkzeugen, nur unter Verwendung beispielsweise einer Bogenoffsetdruckmaschine mit Kaltfolieneinrichtung, ohne auf diesen Druckmaschinentyp oder das Druckverfahren begrenzt zu sein. Eine Siebdruckmaschine welche die RFID-Antennen mittels Silberleitpaste druckt braucht für die gleiche Menge Antennen je nach Maschinenkonfiguration zwischen 10 und 20 Stunden. Zudem kommen teurere Silberleitpasten zum Einsatz und es sind hohe Energiekosten durch Trocknungseinrichtungen zu berücksichtigen.

In einer Ausführungsform erfolgt die Realisierung der resonanten Antennenstrukturen nicht in einer herkömmlichen Druckmaschine sondern erst beim Schritt der Mikrospulenanbringung an die resonanten Strukturen in einer dafür geeigneten Maschine. Dies kann ebenfalls Rolle-zu-Rolle oder Bogenweise passieren. So kann das sogenannte "Transponder assembly lines" erst den Chip auf die Mikrospule aufsetzen und anschließend dieser Verbund mit der resonanten Antennenstruktur zusammengebracht werden, wobei beispielsweise Kleber auf das Substrat aufgebracht und ein Transfermaterial zugefahren wird. Vorteilhafterweise kann somit in einfacher Weise eine komplette RFID-Transponder-Konfiguration erstellt werden.

In einer weiteren Ausführungsform werden die Mikrospulen separat gefertigt und mit Mikrochips bestückt und mit ebenfalls separat gefertigten resonanten Antennenstrukturen in einer weiteren Maschine miteinander verbunden, so dass erst in dieser Maschine eine Komplettierung des RFID-Systems erfolgt. Dies kann besonders bevorzugt in Rolle zu Rolle operierenden Maschinen erfolgen.

Im Folgenden soll die Erfindung anhand von Figuren erläutert werden, ohne jedoch auf diese beschränkt zu sein. Es zeigen:
- Fig. 1: UHF-Dipol-Antennen in verschiedenen Geometrien,
- Fig. 2: Spule und Mikrochip als impedanzanpassende Struktur,
- Fig. 3: Anordnungsmöglichkeiten von UHF-Dipolantenne und Spule mit Mikrochip
- Fig. 4: Baugruppen auf einer Verpackung
- Fig. 5: UHF-Dipolantenne und Spule mit Mikrochip auf separaten Gegenständen

Eine Baugruppe besteht in einem ersten Ausführungsbeispiel im Wesentlichen aus einer strukturierten Schicht eines Klebers und einer darauf angeordneten Transferschicht als Antenne 2 auf einem elektrisch nicht leitenden Substrat 1. Die Antenne ist als UHF-Dipolantenne ausgeführt und besitzt zwei voneinander beabstandete Dipolenden. Dabei werden beispielhaft 2 verschiedene Geometrien als Antenne 2 realisiert.

Zur Herstellung einer Baugruppe wird in einem zweiten Ausführungsbeispiel ein Transferfolienverfahren in Form eines Kaltfolienverfahrens verwendet. Besonders bevorzugt ist es dabei, einen strukturierten Kleber auf das elektrisch nicht leitende Substrat 1 aufzubringen. Die Strukturierung und Aufbringung von Klebern ist technisch sehr leicht möglich, im Gegensatz zum zumindest partiellen Entfernen von Strukturen aus einem vollflächigen Material. Letzteres geschieht meist durch nasschemische Prozesse wie Ätzen und ist daher von der Substratauswahl und vom aufzubringenden Medium sehr begrenzt und daher nachteilig. Die Strukturierung des Klebers hat weiterhin die Vorteile sehr flexibel Layoutwechsel oder Änderungen der Datenstruktur vorzunehmen. Dies ist in einer besonders bevorzugten Variante des Offsetdruckes das Auswechseln einer Offsetplatte oder eines Gummituchs.

In einer weiteren Ausführungsform wird der Kleber zuerst auf die Transferfolie aufgebracht und anschließend diese zumindest partiell klebende Transferfolie mit dem Substrat 1 in Kontakt gebracht. Geeignete Verfahren zur Kleberaufbringung sind bevorzugt Flach-, Hoch-, Tief- und Sonderdruckverfahren. Besonders bevorzugt Offsetdruck- , Flexo- und Inkjetverfahren.

Besonders vorteilhaft ist es, wenn die UHF-Dipol-Antenne und/oder der kapazitive Informationsträger 8 Teil eines Druckproduktes, beispielsweise einer Verpackung 4 ist. Die Verpackung 4 kann beispielsweise für Lebensmittel, Schmuck, Kosmetik oder aber im medizinischen Bereich zum Transport von wichtigen Medikamenten oder aber Organen eingesetzt werden. Vorteilhafterweise ist ein Einsatz der Erfindung in allen Bereichen möglich und vorteilhaft, in welchen Informationen mittels RFID-Technik und/oder kapazitiver Lesetechnik ausgelesen werden sollen.

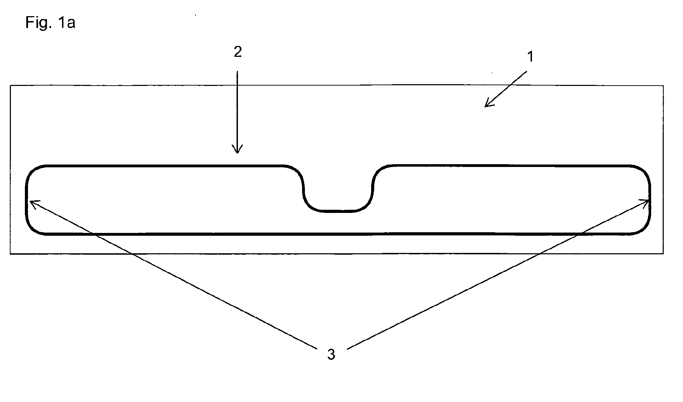

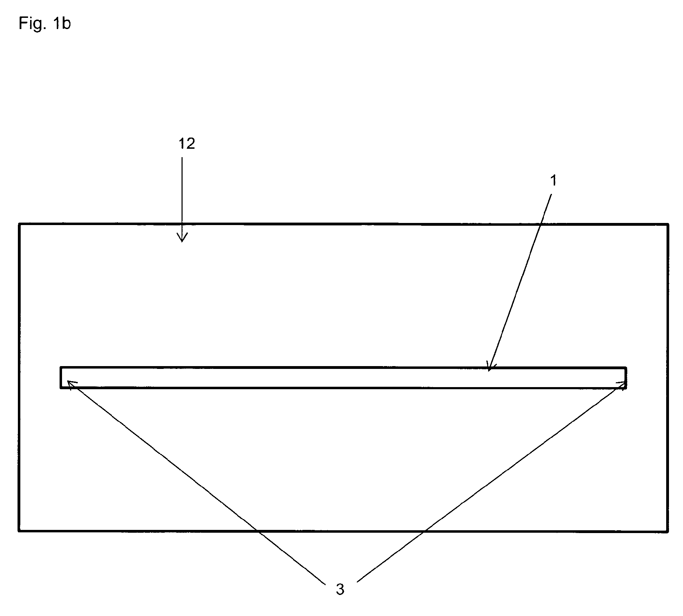

Die Fig. 1 zeigt zwei verschiedene Geometrien von Antennen 2 in einer prinzipiellen Darstellung. Auf dem elektrisch nicht leitenden Substrat 1 ist wenigstens eine strukturierte Schicht eines Klebers und mindestens eine elektrisch leitende Transferschicht auf dieser Schicht als die Antenne 2 angeordnet. Die Fig. 1 a und 1 b zeigen beispielhaft verschiedene Geometrien von Antennen 2. In Fig. 1b ist die Antenne 2 als UHF-Schlitzantenne 12 ausgeführt. Die Transferschicht ist vorteilhafterweise ein Bestandteil einer Transferfolie. Ein anderer Bestandteil der Transferfolie ist ein Träger der Transferschicht. Die Verbindung der zwei Bestandteile ist dabei so ausgebildet, dass das Adhäsionsvermögen der strukturierten Kleberschicht höher als das Kohäsionsvermögen der Transferschicht und das Adhäsionsvermögen des Substrats 1 ist. Die Transferschicht besteht bevorzugt aus Partikeln oder enthält Partikel, die aus Metall, wenigstens einer Metalllegierung, Graphit, einem dielektrischen Stoff jeweils einzeln oder in wenigstens einer Kombination bestehen. Die Antennen 2 sind bevorzugt auf Gegenständen oder Verpackungen 4 aufgebracht, welche zur Verkaufssteigerung die optische Veredlung gleichzeitig um die Antenne 2 beispielsweise zur Produktsicherung ergänzt. Damit wird eine kostenneutrale und ohne zusätzlichen Aufwand realisierte Antenne 2 hergestellt. In einer besonders bevorzugten Ausführungsform kann sogar die optische Veredelung gleichzeitig als Antenne 2 ausgeführt sein. Das elektrisch nicht leitende Substrat 1 ist bevorzugt ein Trägermedium, welches beispielsweise aus Papier, Karton, einem Holzwerkstoff, Gummi, Glas, einem Verbundwerkstoff, einem Kunststoff, einem biologisch abbaubaren Kunststoff, wenigstens einem Zellulosederivat, mindestens einem Stärkederivat oder wenigstens einer Kombination davon besteht. Besonders vorteilhaft sind natürlich abbaubare Substrate 1. Besonders bevorzugt wird das Papier aus Zellstoff oder Holzstoff aus Holzschliff hergestellt. Das Papier kann beispielsweise in Form von Pappe oder Karton vorliegen. Pappe ist für diese Anwendungen ein aus Zellstoff oder Altpapier durch Zusammenkleben oder Zusammenpressen gefertigter Werkstoff. Bei dem Karton kann es sich um ein aus ein oder drei oder mehr Lagen zusammengeklebten Papierkörper handeln, bei dem die Deckschichten und die mittleren Einlagen eine gleiche oder unterschiedliche Zusammensetzung aufweisen, indem beispielsweise die Deckschichten aus holzfreien Stoffen hergestellt und die mittleren Einlagen aus holzhaltigen Stoffen bereitgestellt werden.

Ein weiteres bevorzugtes Substrat 1 ist Kunststoff. Bevorzugt kann es sich um Polyethylen, Polypropylen, Polyvinylchlorid, Polystyrol, Polycarbonat, Polyurethan, PVDF, Polyethylenterephthalat oder Co-Polymeren der Vorgenannten handeln. Die Verwendung von biologisch abbaubaren Folien aus Maisstärke und Zellulosederivaten kann ebenfalls bevorzugt sein.

Die funktionalen Schichten für die Antenne 2, die Informationsschicht in Form eines kapazitiven Informationsträgers 8 und/oder die optische Schicht in Form eines optischen Codes 9 können bevorzugt Metalle oder metallhaltige Stoffe sein, wie zum Beispiel Kaltfolien mit einer Aluminium- oder anderen Transferschichten oder aber auch die bereits genannten dielektrischen Materialien oder aber Graphit und Ruß. Eine sehr gute elektrische Leitfähigkeit ist für diese Anwendung völlig überraschend nicht unbedingt nötig. Positive Ergebnisse konnten selbst mit Flächenwiderständen von mehr als 100Ω/□ erzielt werden. Die elektrische Leitfähigkeit kann im Sinne der Erfindung insbesondere auch als Konduktivität bezeichnet werden. Bevorzugte Metalle oder metallhaltige Stoffe umfassen Aluminium, Blei, Eisen, Gold, Kupfer, Magnesium, Wolfram, Zink oder Zinn. Selbstverständlich ist es auch möglich, dass die Metalle oder die metallhaltigen Stoffe Elemente wie Chrom, Molybdän oder andere umfassen. Dielektrische Materialien ist jede elektrisch schwach oder nicht leitende, nicht metallische Substanz, deren Ladungsträger im Allgemeinen frei beweglich sind. Es kann sich hierbei beispielsweise um elektrisch leitfähige Kunststoffe wie PEDOT und PANI handeln. Besonders bevorzugt ist es, wenn die Schicht in Form der Antenne 2 und/oder als kapazitiven Informationsträger 8, letztere als Kapazität oder Induktivität, mit der Kaltfolientechnik oder Kaltfolienveredelung auf das nicht leitende Substrat 1 aufgebracht wird. Selbstverständlich ist es auch möglich, statt der Kaltfolientechnik Verfahren mittels Heißfolien-Prägemaschinen oder ähnlichem einzusetzen. Besonders bevorzugt ist die Kaltfolientechnik.

Als Kleber können sowohl permanent als auch temporär klebende Kleber benutzt werden. Sowohl wässrige als auch lösemittelhaltige Kleber eignen sich zur Strukturierung und zum lokalen Herauslösen der Transferschicht als auch physikalisch oder chemisch abbinde Kleber. Der Begriff Kleber umfasst dabei im Sinne der Erfindung insbesondere auch klebrige Materialien echten organischen Ursprungs welche der Fachmann als Leime bezeichnet. Besonders bevorzugt sind physikalisch abbindende Kleber für Offsetdruckmaschinen. Die physikalischen Effekte umfassen bevorzugt Temperatur, aber auch Lichtquellen wie beispielsweise UV-Licht. Es können weiterhin auch elektrisch leitfähige Kleber benutzt werden, sollte dies erforderlich sein.

In einer weiteren Ausführungsform besteht die Baugruppe aus einer resonanten Struktur in Form der Antenne 2 und einer impedanzanpassenden Struktur in Form einer Spule 5 mit wenigstens einem damit elektrisch verbundenen Mikrochip 6, wobei sich die Spule 5 und der Mikrochip 6 auf einem Zwischenträger befinden.

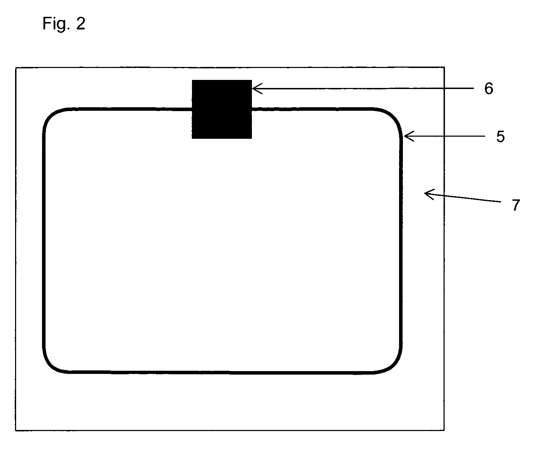

Die Fig. 2 zeigt eine Spule 5 und einem Mikrochip 6 in einer prinzipiellen Darstellung auf einem Zwischenträger 10. Das Material des Zwischenträgers 10 ist ausgewählt aus den Substratmaterialien und ist bevorzugt selbstklebend ausgerüstet.

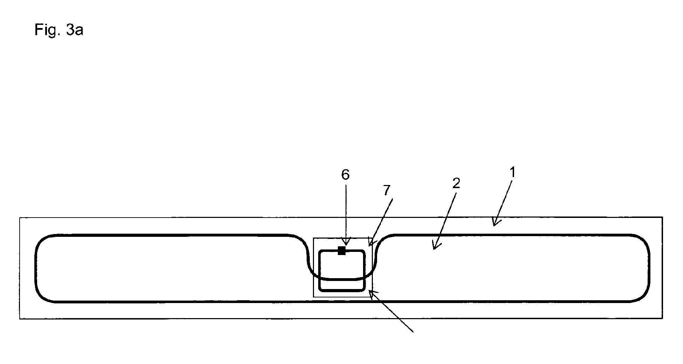

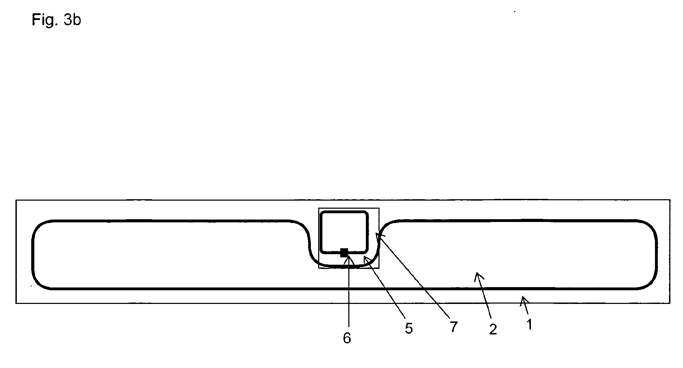

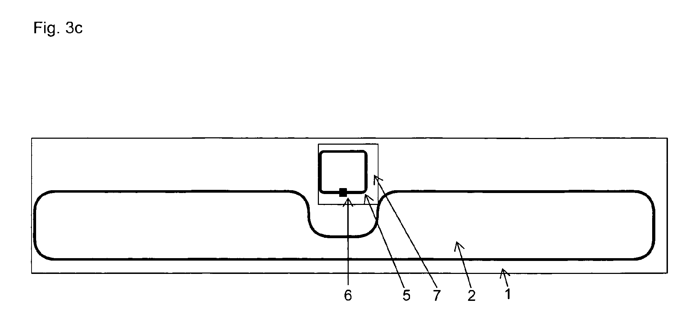

Die Fig. 3a bis c zeigen Antennen 2 mit einer resonanten Struktur in Verbindung mit einer Spule 5 und einem Mikrochip 6 als impedanzanpassende Struktur in prinzipiellen Darstellungen. Damit kann bevorzugt ein RFID-Transponder realisiert werden.

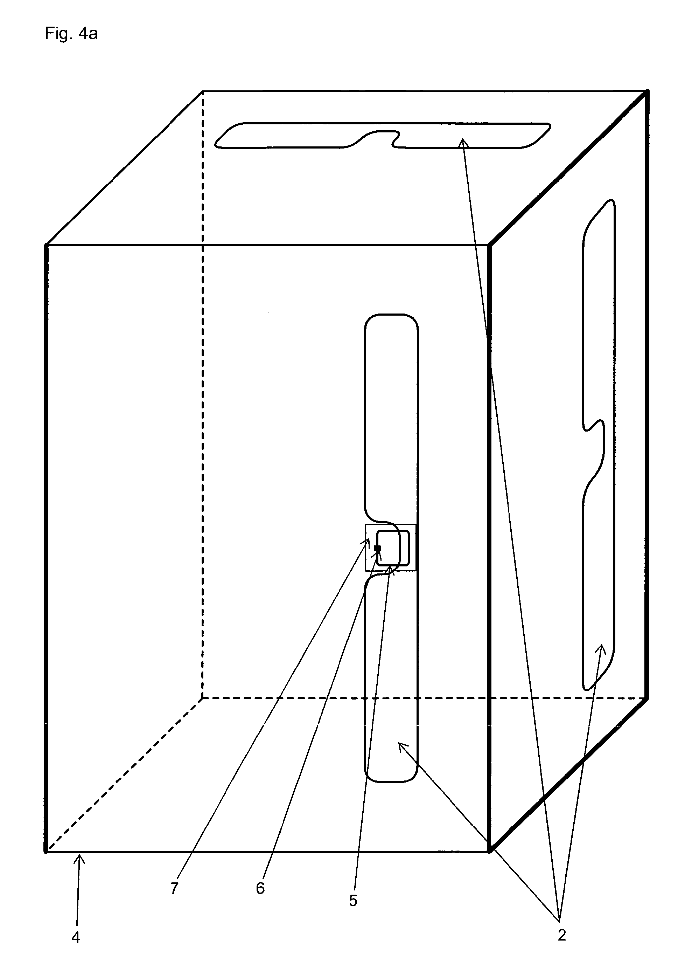

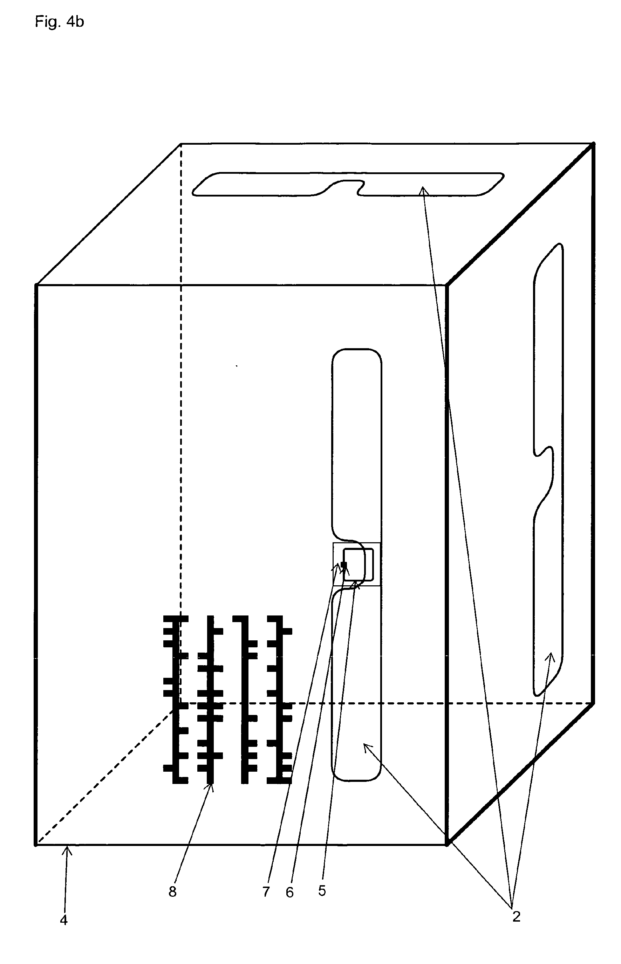

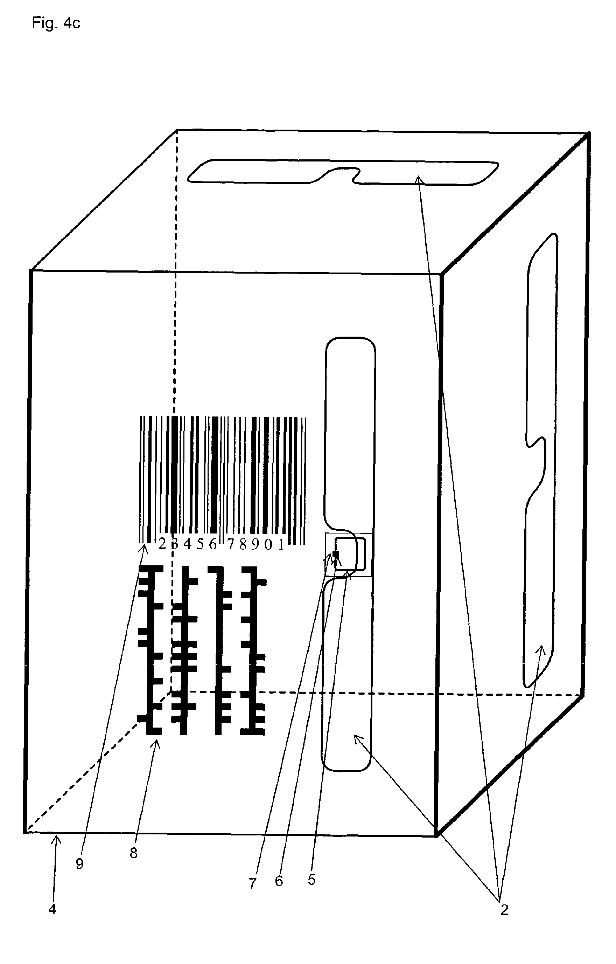

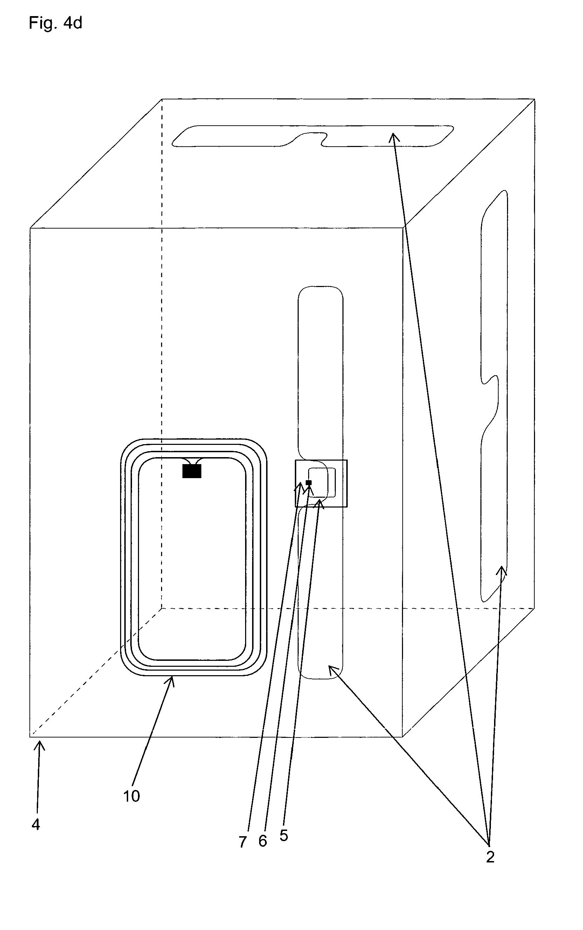

Die Fig. 4 zeigen Baugruppen auf einer Verpackung 4 in prinzipiellen Darstellungen.

Die Fig. 4 a zeigt eine Verpackung 4 mit Antennen 2 an verschiedenen Oberflächen der Verpackung 4. Eine Antenne 2 ist mit einer Spule 5 und einem Mikrochip 6 auf einem Zwischenträger 7 ausgerüstet.

Die Fig. 4b zeigt eine Verpackung 4 mit Antennen 2 an verschiedenen Oberflächen der Verpackung 4. Eine Antenne 2 ist mit einer Spule 5 und einem Mikrochip 6 auf einem Zwischenträger 7 ausgerüstet. Die Verpackung 4 weist darüber hinaus einen kapazitiven Informationsträger 8 auf. Der kapazitive Informationsträger stellt eine kapazitiv auslesbare Struktur dar, so dass vorteilhafterweise ein multipel auslesbarer Informationsträger realisierbar ist.

Die Fig. 4c zeigt eine Verpackung 4 welche zusätzlich zur Fig. 4b einen Barcode als optischen Code 9 auf. Der Barcode stellt eine optische auslesbare Struktur dar, so dass ein weiterer multipel auslesbarer Informationsträger realisiert ist.

Die Fig. 4d zeigt in einer prinzipiellen Darstellung eine Verpackung 4, wobei neben der Anordnung einer Spule 5 mit einem Mikrochip 6 an einer UHF-Dipol-Antenne 2 ein weiterer RFID-Transponder eines weiteren Frequenzbereichs 10 angeordnet ist. Damit ist vorteilhafterweise ein multiple auslesbarer RFID-Transponder realisierbar. Der Dateninhalt der Informationsträger dieser Ausführungsformen ist gleichen oder unterschiedlichen Dateninhalten eines Speichers zugeordnet.

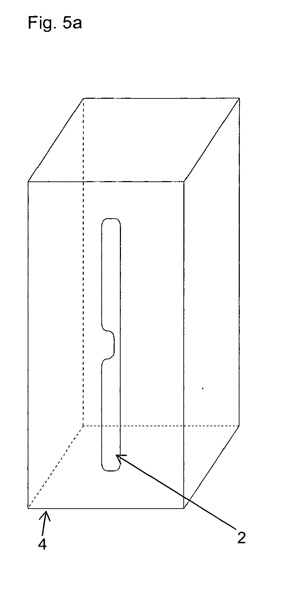

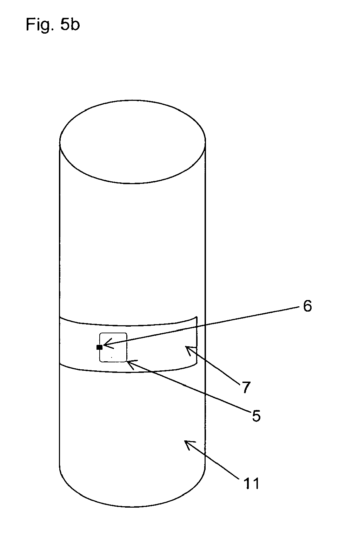

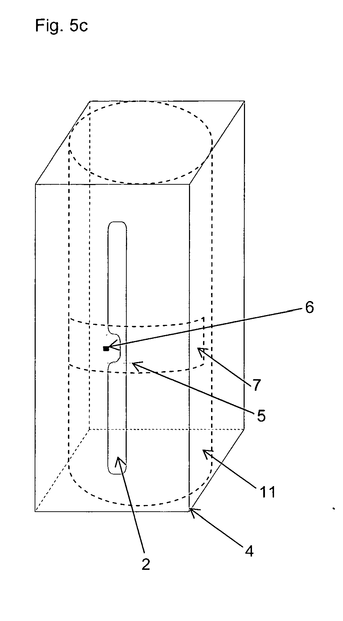

Fig. 5a zeigt eine Verpackung 4 mit einer UHF-Dipol-Antenne 2. Fig. 5b zeigt einen Gegenstand 11 mit einer Spule 5 und einem Mikrochip 6 auf einem Zwischenträger 7. Fig. 5c zeigt den Gegenstand 11 in der Verpackung 4. Dabei liegen Spule 5 und Mikrochip 6 auf dem Zwischenträger 10 in Annäherung von 0-3cm zur Verpackung 4 mit UHF-Dipol-Antenne 2. Damit ist vorteilhafterweise ein funktionsfähiger RFID-Transponder realisierbar. Die Baugruppe ist in einer weiteren Ausführungsform mit wenigstens einer weiteren elektrischen Komponente auf dem Substrat 1 verbunden, wobei die Komponente ein galvanisches Element und/oder eine Kondensatoranordnung und/oder ein Chip ist. Mindestens die Baugruppe ist mit mindestens einer schützenden Deckschicht versehen. Die Deckschicht ist bevorzugt eine Kleber-, eine Farb-, eine Lackschicht oder wenigstens eine Kombination davon oder ist ein Substrat 1. Günstigerweise besteht das Substrat aus Papier, Karton, einem Holzwerkstoff, einem Verbundwerkstoff, einem Kunststoff, einem biologisch abbaubaren Kunststoff, wenigstens einem Zellulosederivat, mindestens einem Stärkederivat oder wenigstens einer Kombination davon. Besonders vorteilhaft sind natürlich abbaubare Substrate 1.

### Bezugszeichenliste:

- 1: Substrat
- 2: UHF-Dipol-Antenne
- 3: Dipolenden
- 4: Verpackung
- 5: Spule
- 6: Mikrochip
- 7: Zwischenträger
- 8: Kapazitiver Informationsträger
- 9: Optischer Code
- 10: RFID Transponder eines weiteren Frequenzbereichs
- 11: Gegenstand
- 12: UHF-Schlitzantenne

## Patentansprüche

1. Baugruppe mit wenigstens einer UHF-Dipol-Antenne aufweisend zwei beabstandete Dipolenden,
herstellbar durch ein Druckverfahren umfassend die folgenden Schritte:
a. Bereitstellung einer Transferfolie auf einer Rolle, wobei die Transferfolie eine Trägerfolie und eine zumindest bereichsweise darauf befindlichen elektrisch leitfähigen Transferschicht umfasst,
b. Bereitstellung eines nicht leitfähigen Substrates,
c. Bereitstellung eines Klebers,
d. strukturierte Aufbringung des Klebers gemäß c) auf das Substrat gemäß b) und/oder auf die Transferfolie gemäß a),
e. wobei die Struktur des Klebers so aufgebracht ist, dass der maximale Abstand der Dipolenden quer zur Abrollrichtung der Transferfolie liegt.

2. Baugruppe mit wenigstens einer UHF-Dipol-Antenne aufweisend zwei beabstandete Dipolenden,
herstellbar durch ein Druckverfahren gemäß des Anspruchs 1, wobei e. ausgetauscht ist durch folgenden Schritt:
e'. wobei die Struktur des Klebers so aufgebracht ist, dass der maximale Abstand der Dipolenden keinesfalls längs zur Abrollrichtung der Transferfolie liegt.

3. Baugruppe mit wenigstens einer UHF-Dipol-Antenne bevorzugt nach Anspruch 1 oder 2,
**dadurch gekennzeichnet, dass**
auf ein elektrisch nicht leitfähiges Substrat eine elektrisch leitfähige Transferschicht mit einer Schichtdicke von 1-1100 nm, bevorzugt 5-900 nm und besonders bevorzugt von 10-780 nm aufgebracht ist.

4. Baugruppe mit wenigstens einer UHF-Dipolantenne nach einem oder mehreren der vorherigen Ansprüche,
**dadurch gekennzeichnet, dass**
der Kleber ein elektrisch leitfähiger Kleber ist.

5. Baugruppe nach einem oder mehreren der vorherigen Ansprüche,
**dadurch gekennzeichnet, dass**
auf dem Substrat mindestens eine kapazitiv und/oder induktiv auslesbare Struktur als kapazitiver und/oder induktiver Informationsträger aufgebracht ist.

6. Baugruppe nach einem oder mehreren der vorherigen Ansprüche,
**dadurch gekennzeichnet, dass**
auf dem Substrat mindestens eine optisch auslesbare Struktur, bevorzugt ein Code, aufgebracht ist.

7. Baugruppe nach einem oder mehreren der vorherigen Ansprüche,
**dadurch gekennzeichnet, dass**
diese durch eine elektrisch nicht leitfähige Schicht, bevorzugt eine Papierschicht, eine Folienschicht, eine Farbschicht, eine Lackschicht und/oder Kombinationen derer, wenigstens bereichsweise überdeckt ist.

8. Verwendung einer Baugruppe nach Anspruch 6 oder 7 als multipel auslesbarer Informationsträger.

9. Verwendung einer Baugruppe nach einem der Ansprüche 1 bis 7,
**dadurch gekennzeichnet, dass**
diese als RFID-Transponder eingesetzt wird, wobei die UHF-Dipolantenne als eine Resonanz anpassende Struktur verwendet wird und mit einer Impedanz anpassenden Spule und wenigstens einem damit elektrisch verbundenem Mikrochip in räumliche Annäherung von 0-3 cm gebracht vorliegt.

10. Verwendung einer Baugruppe nach Anspruch 9,
**dadurch gekennzeichnet, dass**
die Spule und/oder der Mikrochip auf einem separaten Zwischenträger angeordnet sind und der Zwischenträger bevorzugt selbstklebend ausgeführt ist.

11. Verwendung einer Baugruppe nach Anspruch 9 oder 10,
**dadurch gekennzeichnet, dass**
die UHF-Dipol-Antenne auf oder an einem ersten Gegenstand und die Spule mit wenigstens einem damit elektrisch verbundenem Mikrochip auf oder an einem zweiten Gegenstand angeordnet ist und diese Gegenstände in räumliche Annäherung von 0-3cm gebracht vorliegen.

12. Verwendung einer Baugruppe nach einem oder mehreren der vorherigen Ansprüche,
**dadurch gekennzeichnet, dass**
die Baugruppe mit wenigstens einer weiteren elektrischen Komponente, umfassend ein galvanisches Element, eine Kondensatoranordnung und/oder ein Chip, verbunden ist.

13. Verwendung einer Baugruppe nach einem oder mehreren der vorherigen Ansprüche,
**dadurch gekennzeichnet, dass**
diese als mehrfrequenzfähiger RFID-Transponder eingesetzt wird, wobei auf oder an dem Substrat der UHF-Dipolantenne mindestens ein weiterer RFID Transponder eines weiteren Frequenzbereichs angeordnet ist.

14. Verwendung einer Baugruppe nach einem oder mehreren der vorherigen Ansprüche,
**dadurch gekennzeichnet, dass**
die Baugruppe ein Bestandteil einer Verpackung und/oder eines Gegenstandes ist und/oder auf diesen angeordnet ist.

15. Verwendung einer Baugruppe nach einem oder mehreren der vorherigen Ansprüche,
**dadurch gekennzeichnet, dass**
die Baugruppe ein Teil einer Bebilderung, Schmuckschicht und/oder optischen Veredlung ist.

16. Verwendung einer Baugruppe nach einem oder mehreren der vorherigen Ansprüche als kapazitiven Informationsträger,
**dadurch gekennzeichnet, dass**
die Struktur der UHF-Dipol-Antenne kapazitiv ausgewertet wird.
